# EUROPÄISCHE PATENTSCHRIFT

(11) **EP 2 200 746 B1**
(45) Veröffentlichungstag und Bekanntmachung des Hinweises auf die Patenterteilung: **04.06.2014**
(21) Anmeldenummer: 08784381.9
(22) Anmeldetag: 24.07.2008
(51) Int. Cl.: B03B 9/06, B09B 3/00, C05F 9/00, C05F 17/00, C10L 5/46

(54) **VERFAHREN UND VORRICHTUNG ZUR BEHANDLUNG VON ABFALL MIT ORGANISCHEM ANTEIL**
METHOD AND DEVICE FOR TREATING WASTE HAVING ORGANIC FRACTION
PROCÉDÉ ET DISPOSITIF POUR TRAITER DES DÉCHETS EN PARTIE ORGANIQUES

(30) Priorität: 02.10.2007 DE 102007047291; 19.05.2008 DE 102008024135
(43) Veröffentlichungstag der Anmeldung: 30.06.2010
(73) Patentinhaber: Zweckverband Abfallbehandlung Kahlenberg, 77975 Ringsheim (DE)
(72) Erfinder: GIBIS, Georg, 77975 Ringsheim (DE)
(74) Vertreter: Otten, Herbert
(86) Internationale Anmeldenummer: PCT/DE2008/001205
(87) Internationale Veröffentlichungsnummer: WO 2009/043322

(56) Entgegenhaltungen:
- EP-A- 0 628 526
- EP-A- 1 386 675
- CH-A5- 688 990
- FR-A- 2 384 887

## Beschreibung

Die Erfindung betrifft ein mehrstufiges Verfahren, zur Behandlung eines in einer Behandlungsanlage I mechanisch aufbereiteten Abfalls, welcher organische Stoffe umfasst, nach Anspruch 1 und eine Müllbehandlungsanlage zur Behandlung von Abfall, welcher organische Stoffe umfasst, nach Anspruch 8.

### Stand der Technik

In mechanisch-biologischen Abfallbehandlungsanlagen wird Restabfall, insbesondere Hausabfall mit biogenen Anteilen in der Regel so behandelt, dass heizwertreiche, meist gröbere Bestandteile abgetrennt werden, um sie als Ersatzbrennstoffe zu verwerten und die Biomasse in den verbleibenden organikreicheren Fraktionen ggf. nach vorheriger anaerober Behandlung durch aerobe Verfahren z.B. Endrotte soweit minimiert wird, dass die gerottete Fraktion den Kriterien zur Ablagerung auf Deponien genügt. Die abzubauende Biomasse wird somit nicht weiter verwertet und der Flächen- und Zeitverbrauch bei der Endrotte solcher Materialien ist vergleichsweise groß.

Andere Verfahren trocknen den zumeist mechanisch aufbereiteten Restabfall oder Fraktionen davon thermisch oder biologisch und bereiten den getrockneten bzw. biologisch stabilisierten Rest nach Abtrennung von stofflich Verwertbarem, Störstoffen und Inertien zu Ersatzbrennstoff auf z. B. entsprechend dem Trockenstabilat-Verfahren. Hier bleibt der größte Teil der Biomasse zur weiteren Verwertung im heterogenen Brennstoffgemisch erhalten.

Weitere Verfahren behandeln den mechanisch aufbereiteten Restabfall vor der Trocknung mechanisch-biologisch, z. B. durch Befeuchten, Mischen, Auswaschen. Dadurch werden das zu trocknende Material und der daraus hergestellte Brennstoff homogener. Die ausgewaschenen organischen Inhaltsstoffe können zur Biogaserzeugung eingesetzt werden z. B. entsprechend dem ZAK-Verfahren nach EP 0 937 504 A2. Die saisonal unterschiedliche Abfallzusammensetzung und der Zersetzungsgrad der im Hausabfall enthaltenen Biomasse haben Auswirkungen auf die biologischen Prozesse in einer MBA, die nach dem Stand der Technik nur durch Anpassung der Verweilzeit in den biologischen Stufen z. B einem biologischen Trocknungsverfahren ausgeglichen wird. Dies führt zu einem diskontinuierlichen Betrieb der Anlage bzw. zu der Notwendigkeit große Teile der Anlage größer zu dimensionieren, um Schwankungen abfangen zu können, welche durch unterschiedliche Abfallzusammensetzungen oder unterschiedliche Abfallzustände bedingt sind.

Aus der EP 0 628 526 A1 ist ein Verfahren und ein System zur Umwandlung von Hausmüll bekannt, bei welcher der Hausmüll zunächst in die Bestandteile schwere Fraktion, organische Fraktion und leichte Fraktion getrennt wird und anschließend jede der drei Fraktionen eine spezielle Behandlung erfährt, bei welcher der Fraktion Wasser zugemischt wird.

Aus der CH 688 990 ist eine Aufbereitung organischer und anorganischer Reststoff aus rekonstruieren Altdeponien und/oder Frischmüll zu einem wieder verwertbaren Stoff unter Schadstoffverfrachtung bekannt. Hierbei werden die zu behandelnden Restmüll- ggf. Frischmüllstoffe nach Störstoffabscheidung und vorzugsweise Abtrennung der Mineralfraktion zerkleinert werden und dann unter Einstellung eines auch während der nachfolgenden Behandlung einzuhaltenden temperatur- und Feuchtigkeitsregimes einem aeroben Rottevorgang oder einer anaeroben Vorvergärung unterzogen werden.

Aus der FR 2 384 887 ist ein Verfahren zum Abscheiden von Papierpulpe aus Müll bekannt, wobei zuvor eine Vorsortierung und eine prozessabhängige Fermentation erfolgt, welche von einigen Tagen bis zu 2 Monaten dauert.

### Aufgabe der Erfindung

Ausgehend von diesem vorbekannten Stand der Technik hat die Erfindung die Aufgabe, die Abfälle so zu behandeln, dass Mikroorganismenzahl, Zersetzungsgrad und Struktur optimal eingestellt sind, um die folgenden Behandlungsanlagen höchst effizient mit maximaler Energieausbeute bei geringster Verweilzeit betreiben zu können. Jahreszeitliche Qualitätsschwankungen in aus Restabfällen hergestellten Ersatzbrennstoffen sollen weitgehend eingedämmt werden. Weitere Aufgabe der Erfindung ist es, zur Qualitätssteigerung der Ersatzbrennstoffe Schadstoffe im Abfall gezielt zu mobilisieren und/oder zu reduzieren.

Diese Aufgabe wird ausgehend von den Merkmalen des Oberbegriffs des Verfahrensanspruchs 1 bzw. der Vorrichtungsansprüche 8 durch die kennzeichnenden Merkmale der Ansprüche 1 bzw. 8 gelöst. In den Unteransprüchen sind vorteilhafte und zweckmäßige Weiterbildungen angegeben.

Das erfindungsgemäße Verfahren sieht vor, den Abfall in einer Biobehandlungsanlage II aufzubereiten, welche zwischen der mechanischen Behandlungsanlage I und der Behandlungsanlage III angeordnet ist, um eine in der Behandlungsanlage III erfolgenden Aufteilung in den überwiegend festen Abfallanteil ATA und in den überwiegend flüssigen Abfallanteil ATB vorzubereiten, wobei zur Erzielung einer aeroben Vorfermentation des Abfalls eine Verweildauer des Abfalls und insbesondere eine ergänzende Behandlung des Abfalls in dieser Biobehandlungsanlage II durch für den jeweiligen Abfall spezifische Parameter P-II bestimmt wird, wobei hierzu Parameter P-II wie Temperatur des Abfalls erfasst werden, wobei bei einer niedrigen Temperatur des Abfalls die Verweildauer des Abfalls verlängert wird und/oder eine Vermischung des Abfalls mit wärmeren Abfallfraktionen erfolgt. Mit einer derartigen gezielten Vorbehandlung des Abfalls wird in einer frühen Verfahrensstufe ein standardisierter Abfall erzeugt.

Insbesondere saisonalen Qualitätsschwankungen im Abfall können somit weitestgehend ausgeglichen werden, so dass die nachfolgenden Verfahrensschritte unabhängig von der Jahreszeit kontinuierlich ablaufen können. Dies bringt insbesondere den Vorteil mit sich, dass eine bislang nötige Überdimensionierung von nachfolgenden Anlagenteilen nicht erforderlich ist. Eine kontinuierliche vollständige Anlagenauslastung wird durch eine entsprechende Auslegung der technisch einfachen und damit kostengünstigen Biobehandlungsanlage sicher gestellt. Kern der Erfindung ist eine biologische Vorbehandlung von Abfällen, insbesondere Hausabfällen hinsichtlich eines optimierten Prozessverlaufs zum Erhalt energetisch und stofflich verwertbarer Inhaltsstoffe. Hierbei erfolgt eine Vorbehandlung von Abfällen mit biogenen Anteilen, welche insbesondere innerhalb einer mechanisch-biologischen Abfallbehandlungsanlage eingesetzt werden kann, in der beispielsweise vorbehandelte Abfälle zur Massenminderung und besseren mechanischen Erzeugung von verwertbaren Stoffen und deponierbaren Resten vorwiegend biologisch getrocknet werden.

Weiterhin sieht die Erfindung vor, den in der Biobehandlungsanlage II aufbereitete Abfall in der Behandlungsanlage III zunächst in einem Homogenisierungsvorgang durch Mischen unter Zugabe von Wasser mechanisch zu homogenisieren und anschließend in einem Entwässerungsvorgang auszupressen, um den Abfall in einen überwiegend festen Abfallanteil ATA und einen überwiegend flüssigen Abfallanteil ATB zu trennen. In diesem Homogenisierungsvorgang erhält der aufbereitete Abfall eine breiige Konsistenz, durch welche die erforderlichen Mischkräfte bei minimalem Einsatz von Flüssigkeit reduziert werden. Diese breiige Konsistenz liegt vor, wenn der mit Flüssigkeit versetzte Abfall nicht mehr teigig und noch nicht aufgeschwemmt ist. Der Wassergehalt des breiigen Abfalls beträgt etwa 50 Gewichts-% bis 70 Gewichts-% und insbesondere 60 Gewichts-% der breiigen Masse. Erfindungsgemäß erfolgt im Wesentlichen ein zweistufiger Verfahrensschritt in räumlich getrennten Verfahrenseinheiten, bei welchen in einer durch die Biobehandlungsanlage II gebildeten Stufe 1 der Einsatz einer Vorfermentationsstufe bzw. "Hydrolyse- und Versäuerungsstufe" erfolgt, in welcher die mechanisch aufbereiteten Abfälle je nach saisonaler Erfordernis länger oder kürzer geregelt vorfermentiert werden und bei welchen in einer durch die Behandlungsanlage III gebildeten Stufe 2 der Einsatz einer nachgeschalteten Homogenisierungs- und Entwässerungseinheit erfolgt, in der der vorfermentierte Abfall homogenisiert und in einen überwiegend festen Abfallanteil ATA und einen überwiegend flüssigen Abfallanteil ATB getrennt wird.

Erfindungsgemäß ist es vorgesehen, den Homogenisierungsvorgang in der Behandlungsanlage III in einem Mischbehälter mit einem Rührwerk durchzuführen und den breiigen Abfall anschließend in einer Entwässerungseinrichtung auszupressen um die Trennung in den überwiegend festen Abfallanteil ATA und den überwiegend flüssigen Abfallanteil ATB vorzunehmen. Durch diese zeitliche und räumliche Trennung des Homogenisierungsvorgangs und des Entwässerungsvorgangs ist es möglich die beiden Verfahrensschritte anders als bei einem sogenannten Perkolator unabhängig von einander optimal zu steuern bzw. regeln und technisch zu vereinfachen. Im Gegensatz zu einem Perkolator wird im Mischbehälter nicht entwässert, wird kein Siebboden benötigt und ist keine Schubbodeneinrichtung zur Säuberung des Siebbodens erforderlich.

Die Erfindung sieht vor, die in dem Homogenisierungsvorgang in der Behandlungsanlage III erfolgende Behandlung des Abfalls zum Erhalt einer definierten, breiigen Konsistenz und zum Verbleib von möglichst viel organischer Substanz im überwiegend festen Abfallteil ATA durch eine Regelung wenigstens eines Parameters P-III der Behandlungsanlage III unter Beachtung wenigstens eines Parameters zu regeln, wobei hierzu Parameter P-III wie insbesondere die Verweilzeit und Wassergehalt des Abfalls in der Behandlungsanlage III und wie insbesondere die in das Abfallgemisch eingetragenen Scherkräfte beim Mischen erfasst werden, wobei die Regelung auf der Basis der Parameter P-III derart erfolgt, dass der aus der Behandlungsanlage III nach dem Entwässerungsvorgang ausgeschleuste überwiegend feste Abfallanteil ATA im Vergleich zu seinem Gesamtgewicht noch einen möglichst hohen Anteil an Biomasse aufweist, wodurch insbesondere ohne Zuführung weiterer Energie eine biologische Trocknung des festen Abfallanteils ATA durchführbar ist, bei welcher die durch die mikrobielle Zersetzung eines Teils der organischen Substanz erzeugte Wärme für eine Trocknung ausreicht, während der restliche Teil der organischen Substanz als Biomasse im getrockneten Abfallanteil verbleibt und dass in dem aus der Behandlungsanlage III ausgeschleusten flüssigen Abfallanteil ATB ein Teil, insbesondere ein Großteil der ursprünglich im Abfall enthaltenen löslichen und feinsuspendierten Schadstoffe enthalten ist. Insbesondere durch eine im Vergleich zum oben erwähnten Perkolator kurze Verweilzeit des Abfalls in der Behandlungsanlage III wird einer ungewünschten vollständigen Auflösung von organischen Stoffen vorgebeugt. Zur Erhaltung der organischen Stoffe im späteren festen Abfallanteil ATA trägt auch eine Begrenzung der eingeleiteten Scherkräfte bei. Auch die gegenüber einem Auswaschvorgang reduzierte Flüssigkeitsmenge dient der Erhaltung der organischen Stoffe im späteren festen Abfallanteil ATA.

Die erfindungsgemäße Müllbehandlungsanlage zur Behandlung von Abfall sieht vor, zwischen der Behandlungsanlage I und der Behandlungsanlage III eine Biobehandlungsanlage II anzuordnen, in welcher der Abfall zur Vorfermentation insbesondere durch Mischen des Abfalls und/oder Belüften des Abfalls und/oder Befeuchten des Abfalls behandelbar ist, wobei hierzu Parameter P-II wie Temperatur des Abfalls erfasst werden, wobei bei einer niedrigen Temperatur des Abfalls die Verweildauer des Abfalls verlängert wird und/oder eine Vermischung des Abfalls mit wärmeren Abfallfraktionen erfolgt.

Hierdurch ist eine Standardisierung des Abfalls hinsichtlich für nachfolgende Behandlungsanlagen wesentlicher Qualitätsmerkmale erreichbar, durch welche Störungen oder Erschwerungen des Betriebs nachfolgender Behandlungsanlagen vermeidbar sind. Somit können Störzeiten reduziert werden bzw. somit können alle nachfolgenden Behandlungsanlagen kleiner und damit kostengünstiger konzipiert werden, da keine Überkapazitäten vorgehalten werden müssen, um bei erschwerten Betriebszuständen den gewünschten Durchsatz zu erreichen.

Die erfindungsgemäße Müllbehandlungsanlage sieht vor, in der Behandlungsanlage III einen Brei zu mischen, wobei der Brei aus Abfall A und Wasser besteht und die Behandlungsanlage III hierzu insbesondere einen Mischbehälter und ein Rührwerk umfasst. Im Vergleich mit einem Perkolator erfordert diese Behandlung eine weitaus geringere Wassermenge und erlaubt somit eine kleine und kostengünstige Auslegung der Anlagen für die Wasserbehandlung bzw. für die Wasseraufbereitung.

Weitere Einzelheiten der Erfindung werden in der Zeichnung anhand von schematisch dargestellten Ausführungsbeispielen beschrieben.

Hierbei zeigt:
Figur 1a: eine schematische Darstellung eines Teils einer nach dem Stand der Technik aufgebauten MBA;
Figur 1b: eine erfindungsgemäß modifizierte MBA;
Figur 2: eine schematische Darstellung einer MBA und
Figur 3: eine detaillierte schematische Darstellung einer MBA.

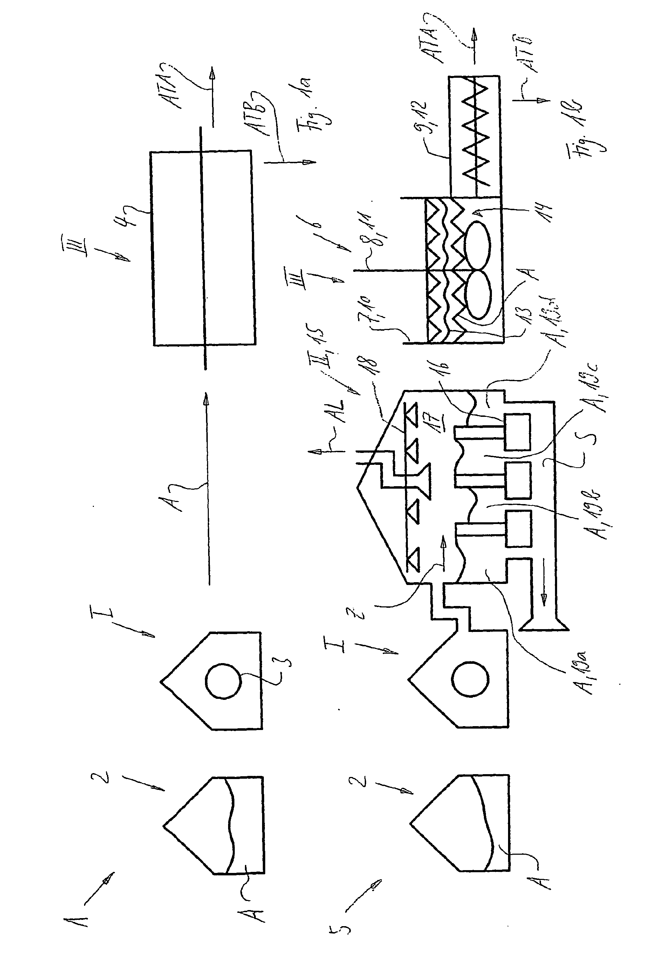

In der Figur 1a ist ein Teil einer nach dem Stand der Technik aufgebauten MBA 1 schematisch dargestellt. Abfall A wird in einen Müllbunker 2 angeliefert und von dort mit nicht dargestellten Fördermitteln an eine mechanische Behandlungsanlage I übergeben, welche beispielsweise ein Trommelsieb 3 zur Absiebung verschiedener Siebfraktionen umfasst. Der mechanisch aufbereitete Abfall A wird anschließend in einer Behandlungsanlage III, die durch einen Perkolator 4 gebildet ist, ausgewaschen und dann als überwiegend fester Abfallanteil ATA und überwiegend flüssiger Abfallanteil ATB weiterbehandelt. Die Funktionsweise eines Perkolators ist beispielsweise in der DE 198 46 336 A1 beschrieben.

In der Figur 1b ist ein Teil einer MBA 5 dargestellt, welche nach dem erfindungsgemäßen Verfahren arbeitet und die erfindungsgemäßen Vorrichtungen umfasst. Zwischen einer Behandlungsanlagen I, welche z.B. entsprechend der zur Figur 1a beschriebenen Behandlungsanlage aufgebaut ist, und einer Behandlungsanlage III, nach welcher der Abfall als überwiegend fester Abfallanteil ATA und als überwiegend flüssiger Abfallanteil ATB weiterbehandelt wird, durchläuft der Abfall A eine Biobehandlungsanlage II. In der Biobehandlungsanlage II findet eine aerobe Vorfermentation des Abfalls A statt, durch welche sichergestellt wird, dass der nachfolgenden Behandlungsanlage III immer Abfall A zugeführt wird, welcher insbesondere bezüglich seiner Temperatur, seiner Feuchtigkeit und seines Organikanteils bzw. seiner organischen Aktivität in vorgegebenen Bereichen liegt. Mit einem derartigen, bezüglich relevanter Eigenschaften standardisierten Abfall A können die nachfolgenden Verfahrensschritte in einem weitgehend kontinuierlichen Betrieb unter ständiger Auslastung erfolgen, da in den nachfolgenden Verfahrensschritten dann keine Qualitätsschwankungen des Abfalls A mehr ausgeglichen werden müssen. In weiterem Unterschied zum Stand der Technik ist die in der Figur 1b gezeigte Behandlungsanlage III nicht als Perkolator ausgeführt (vergleiche Figur 1a), sondern als sogenannte DAMP-Anlage 6, wobei DAMP im Deutschen für "Definierter Aerober Mischprozess" steht und im englischen für "Defined Aerobix Mixing Process" steht. Diese umfasst einen Mischbehälter 7 mit einem Rührwerk 8 und eine auf den Mischbehälter 7 folgende Entwässerungseinrichtung 9. Der Mischbehälter 7 ist als zylindrisches Becken 10 ausgeführt. Das Rührwerk 8 wird durch einen Quirl 11 gebildet, der als sich um die eigene Achse drehende, horizontal angeordnete Welle mit senkrecht zur Drehachse aufgesetzten Rührarmen ausgebildet ist. Die Entwässerungseinrichtung 9 ist als Schneckenpresse 12 ausgeführt. Erfindungsgemäß wird der Abfall A in dem Mischbehälter 7 unter Zugabe von Wasser 13 durch das Rührwerk 8 homogenisiert und weist hierbei eine breiige Konsistenz auf. Unter einer "breiiger Konsistenz" wird im Sinne der Erfindung eine Konsistenz verstanden, bei der der mit Wasser 13 versetzte Abfall A nicht mehr teigig ist und noch nicht aufgeschwemmt ist. Insbesondere schwimmt kein Abfall auf und insbesondere kommt es noch nicht zu lokalen Ansammlungen von Wasser. "Homogenisieren" ist im Sinne der Erfindung also ein Mischen von Abfall A unter Zugabe einer Flüssigkeit, insbesondere von Wasser 13, wobei ein aus Abfall und Flüssigkeit 13 gebildeter Brei 14 entsteht. Nach dem Erreichen des gewünschten Homogenisierungsgrads wird der Brei 14 in der Entwässerungseinrichtung 9 in den festen Abfallanteil ATA und den flüssigen Abfallanteil ATB getrennt, wobei der feste Abfallanteil ATA zur Herstellung eines Ersatzbrennstoffes vorgesehen ist.

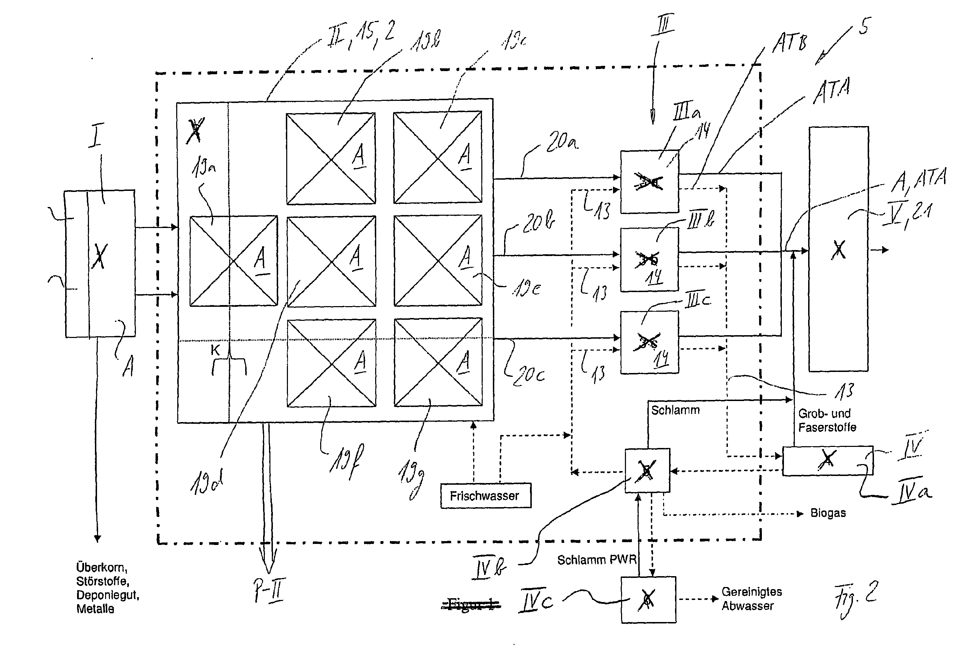

In der Figur 2 ist das erfindungsgemäße Verfahren vereinfacht innerhalb des gestrichelten Rahmens dargestellt.

In der MBA 5 werden Hausabfälle bzw. Abfall A von Sammelfahrzeugen in einem Anlieferungsbunker bzw. Müllbunker 2 entleert und dieser Abfall A wird dort, nach Aussortierung grober Störstoffe, zur mechanischen Aufbereitung in eine Behandlungsanlage I gegeben. Sortierung und Abfallaufgabe im Anlieferungsbereich erfolgen durch mobiles Gerät wie z. B. Greifbagger und Radlader. Die mechanische Aufbereitung erfolgt konventionell: es werden Überkorn, Störstoffe, Deponiegut und Metalle abgetrennt. In der Figur 2 sind Anlieferung bzw. Müllbunker 2 und mechanische Aufbereitung in der Behandlungsanlage I als Block symbolisiert. Die täglich angelieferte Abfallmenge wird komplett mechanisch aufbereitet und ein- oder mehrlinig und komplett gekapselt zu einer Biobehandlungsanlage II gefördert, die als Vorfermentationsstufe 15 ausgebildet ist. Dort übernimmt ein automatisches Kransystem K den Umschlag des aufbereiteten Materials bzw. Abfalls A: Der Abfall A wird dort so eingelagert, dass dieser nach dem Prinzip "first in - first out" in eine Behandlungsanlage III weitertransportiert werden kann. Die ebenfalls gegenüber der Umwelt abgeschirmte bzw. gekapselte Biobehandlungsanlage II bzw. Vorfermentationsstufe 2 ist so dimensioniert, dass je nach Erfordernis mehrere Tageschargen aufbereiteten Abfalls A eingelagert werden können.

Je nach saisonal unterschiedlichem Zustand des Abfalls A wird die Dauer der Vorfermentation des Abfalls A in der Biobehandlungsanlage II bzw. in der Vorfermentationsstufe 2 variiert. Dies erfolgt mit dem Ziel, ganzjährig einen möglichst ähnlich vorbereiteten, standardisierten Abfall A zur weiteren Behandlung in die Behandlungsanlage III zu bringen. Das bedeutet z.B., dass im Sommer nur kurze Aufenthaltszeiten benötigt werden, während in kälteren Jahreszeiten abhängig vom Zersetzungsgrad der Biomasse und der vorliegenden, mikrobiellen Aktivität im Abfall A mehrere Tage z. B. bis zu 5 Tage für diese Vorfermentation einzuplanen sind. Während der geregelten Vorfermentation in der Biobehandlungsanlage II werden Prozessparameter aufgenommen, die die mikrobielle Stoffwechselaktivität im Abfall A beschreiben. Anhand dieser Parameter P-II kann durch ständige Anpassung der Milieubedingungen eine gezielte und auf die nachfolgenden Behandlungsanlagen III bzw. V abgestimmte Vorfermentation erreicht werden. Besonders zielführend ist die Regelung der Abfalltemperatur durch Nutzung der biologisch erzeugten Wärme, da dadurch eine besonders schnelle und umfassende Vorfermentation des Abfalls A erreicht wird. Die nachfolgenden Prozesse laufen so effizienter und stabiler ab. Durch die geregelte Vorfermentation ist der Abfall A stark hydrolysiert und versäuert. Die Versäuerung mobilisiert Schwermetalle, die in der Behandlungsstufe III aus dem vorfermentierten Abfall A in einen flüssigen Abfallanteil ATB ausgelöst werden und dadurch den Schadstoffgehalt in einem festen Abfallanteil ATA senken.

Ein Be- und Entlüftungssystem sorgt für den erforderlichen Luftwechsel in der Biobehandlungsanlage II bzw. der Vorfermentationsstufe 15 (siehe auch Figur 1b). Eine insbesondere aus der Behandlungsanlage I stammende Zuluft Z wird gezielt durch den zu fermentierenden Abfall A in ein Saugsystem S gesaugt, das im Boden 16 der Biobehandlungsanlage II installiert ist (siehe Figur 1b). Bei Bedarf wird die Strömungsrichtung geändert, so dass eine Druckbelüftung mit Absaugung einer Abluft AL aus einer durch die Biobehandlungsanlage II gebildeten Vorfermentationskammer 17 erfolgen kann (siehe Figur 1b).

Zur Einstellung einer optimalen Feuchte wird der Abfall A in der Biobehandlungsanlage II beispielsweise durch Sprinklersysteme 18 beregnet. Neben der Umschichtung des Abfalls A von der Abwurfstelle der Förderer aus der Behandlungsanlage I zum vorgesehenen Bunker 19a - 19g bzw. Platz in der Biobehandlungsanlage II übernimmt das Kransystem K auch die Beschickung der nächsten Behandlungsanlage III. Das Kransystem K ist in der Figur 1b zur Erhaltung der Übersichtlichkeit nicht dargestellt.

Nach der Vorfermentation sind sowohl Schadstoffe im Abfall A leichter lösbar, als auch der Abfall A homogen durchwärmt. In diesem Zustand wird der Abfall A kontinuierlich oder in Chargen in die nachfolgende Behandlungsanlage III dosiert. Hier arbeiten identische Module IIIa - IIIc parallel. Jedes Modul IIIa - IIIc wird von je einem eigenen gekapselten Fördersystem 20a - 20c beschickt. Die Module IIIa - IIIc haben die Aufgabe, den vorfermentierten Abfall A unter Zugabe von Wasser 13 zu homogenisieren, wodurch auch Schadstoffe gelöst werden. Zudem wird Wärme aus dem Abfall A auf das Wasser 13 übertragen. Zur Wiederverwendung dieses Wassers 13 in der Behandlungsanlage III muss dieses definiert aufbereitet werden. Hierbei werden ungelöste Grob- und Faserstoffe abgetrennt und beispielsweise mit dem festen Abfallanteil ATA weiterbehandelt. Die organischen Inhaltsstoffe im Wasser 13 werden beispielsweise durch Vergärung zu Biogas reduziert. Da das Wasser 13 der Vergärung bereits vorgewärmt zugeführt wird, ist die Zuführung von Fremdwärme in den Gärprozess im Regelbetrieb nicht nötig. Überschüssiges Wasser 13 wird nach einer Wasserreinigung ausgeschleust, ebenso wie überschüssiger Schlamm. Vergärung, Wasserreinigung und Schlammbehandlung sind durch eine Behandlungsanlage IV, welche die Anlagenteile IVa, IVb und IVc umfasst, in der Figur 2 symbolisiert. Auf diesem Weg verlassen auch die dem Abfall A entnommenen Schadstoffe das System.

Durch die gezielte Vorfermentation in der Biobehandlungsanlage II ist die Verweilzeit des Abfalls A in der Behandlungsanlage III im Vergleich zu einer Behandlung in einem Perkolator nur kürzer. Dadurch wird sowohl die mechanische Beanspruchung des Abfalls A bzw. der Abfallstruktur als auch der Verschleiß der Anlagenkomponenten und der Energieverbrauch in der Behandlungsanlage III minimiert. Des Weiteren bleiben in Folge der reduzierten Behandlungsdauer der Energieinhalt und die aerobe biologische Aktivität des Abfalls A vergleichsweise hoch. Damit ist in der späteren biologischen Trocknung des festen Abfallanteils ATA das Material optimal belüftbar und die kurzfristige Freisetzung biologisch erzeugter Wärme sorgt dort für kurze Verweilzeiten und damit auch für einen sehr effizienten weiteren Prozessablauf. Durch die kurze Verweilzeit in der Behandlungsanlage III wird Biomasse auch nur partiell in den flüssigen Abfallanteil ATB überführt. Hierdurch wird ein positiver Beitrag zum Anteil an regenerativer Biomasse in dem festen Abfallanteil ATA bzw. in einem späteren Ersatzbrennstoff geleistet und dessen CO2-Bilanz verbessert.

Nach der Homogenisierung wird ein aus dem Abfall A und dem Wasser 13 gebildeter Brei 14 über ein in der Figur 2 nicht dargestelltes Austragssystem z. B. Förderschnecken in in der Figur 2 nicht dargestellte Entwässerungspressen ausgetragen und mechanisch entwässert. Der mechanisch entwässerte Feststoff bzw. der feste Abfallanteil ATA wird zur weiteren Reduktion des Wassergehalts in die Behandlungsanlage V, die als Trocknungsstufe 21 ausgeführt ist, gefördert und dort z. B. biologisch getrocknet. Nach ausreichendem Trockengrad kann der feste Abfallanteil ATA dann mechanisch weiter zu Ersatzbrennstoffen und Inertstoffen zur Ablagerung aufbereitet werden.

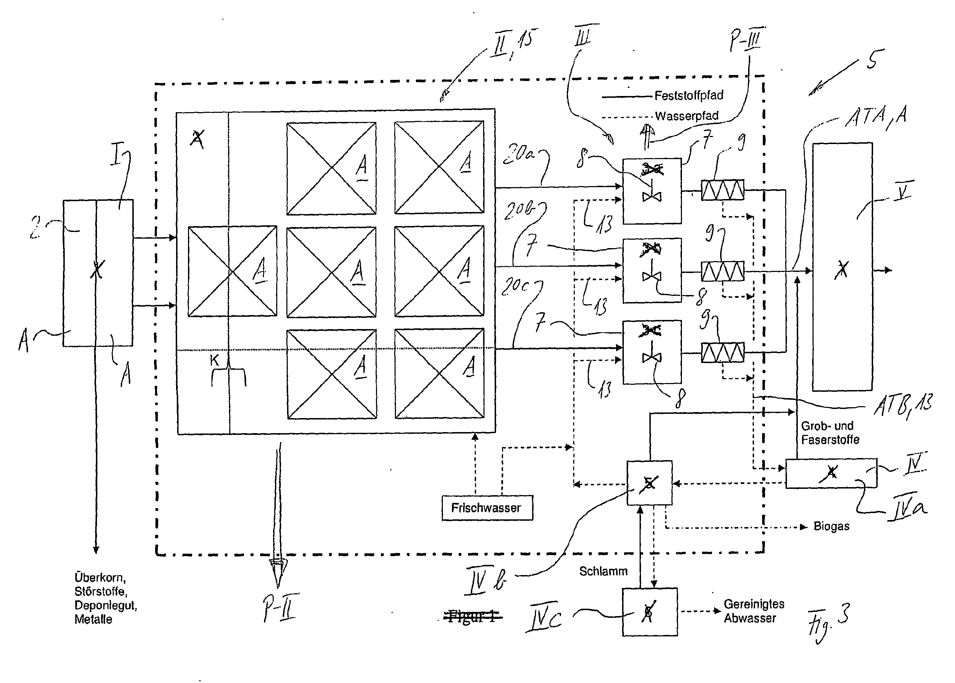

Die Figur 3 zeigt eine im Vergleich zu der Figur 2 detaillierte schematische Darstellung einer MBA 5. Grundsätzlich wird hier zunächst auf die Beschreibung zu der Figur 2 verwiesen. Im Unterschied zu der Figur 2 ist die Behandlungsanlage III mit mehr Einzelheiten dargestellt. Die MBA 5 nutzt ein mehrstufiges Verfahren, zur Verarbeitung eines in der Behandlungsanlage I mechanisch aufbereiteten Abfalls A, welcher organische Stoffe umfasst, und in der Behandlungsanlage III unter Zugabe von Wasser 13 und mit mechanischer Umwälzung weiterbehandelt wird und in dieser Behandlungsanlage III in den überwiegende festen Abfallanteil ATA und in den überwiegend flüssigen Abfallanteil ATB aufgetrennt wird. Zur Vorbereitung einer in der Behandlungsanlage III erfolgenden Aufteilung in den überwiegend festen Abfallanteil ATA und in den überwiegend flüssigen Abfallanteil ATB wird der Abfall A in einer Biobehandlungsanlage II behandelt. Zur Erzielung einer aeroben Vorfermentation des Abfalls A wird eine Verweildauer des Abfalls A und insbesondere eine ergänzende Behandlung des Abfalls A in der Biobehandlungsanlage II durch für den jeweiligen Abfall A spezifische Parameter P-II bestimmt. Hierzu werden Parameter P-II wie insbesondere Temperatur des Abfalls A, wie insbesondere Anteil an organischen Stoffen im Abfall A, wie insbesondere Feuchtigkeit des Abfalls A und wie insbesondere Sauerstoffbedarf des Abfalls A erfasst. Entsprechend wird bei einer niedrigen Temperatur des Abfalls A die Verweildauer des Abfalls A verlängert und/oder mittels des Kransystems K eine Vermischung des Abfalls A mit wärmeren Abfallfraktionen vorgenommen. Entsprechend wird insbesondere bei einem geringen Anteil an organischen Stoffen im Abfall A die Verweildauer des Abfalls A verlängert und/oder eine Vermischung mit organikreicheren Abfallfraktionen vorgenommen. Entsprechend wird insbesondere bei einer geringen Feuchtigkeit des Abfalls A eine Vermischung mit feuchteren Fraktionen vorgenommen und/oder der Abfall A befeuchtet. Entsprechend wird insbesondere der Sauerstoffbedarf des Abfalls A erfasst und ggf. durch Zuführung von Luft oder Absaugung von Luft geregelt.

Weiterhin wird der in der Biobehandlungsanlage II aufbereitete Abfall A in der Behandlungsanlage III zunächst in einem Homogenisierungsvorgang durch Mischen unter Zugabe von Wasser 13 mechanisch homogenisiert und anschließend in einem Entwässerungsvorgang mit Hilfe der Entwässerungseinheiten 9 ausgepresst wird, um den überwiegend festen Abfallanteil ATA und den überwiegend flüssigen Abfallanteil ATB zu erzeugen. Der Homogenisierungsvorgang erfolgt zuvor in Mischbehältern 7 mit Rührwerken 8.

Die in dem Homogenisierungsvorgang in der Behandlungsanlage III erfolgende Behandlung des Abfalls A zum Erhalt einer definierten, breiigen Konsistenz und zum Verbleib von möglichst viel organischer Substanz im überwiegend festen Abfallteil ATA wird durch eine Regelung wenigstens eines Parameters P-III der Behandlungsanlage III geregelt. Hierzu finden insbesondere Parameter P-III wie insbesondere Verweilzeit und Wassergehalt des Abfalls A in der Behandlungsanlage III und wie insbesondere die in das Abfallgemisch eingetragenen Scherkräfte beim Mischen Verwendung. Die Regelung erfolgt dann auf der Basis der Parameter P-III mit dem Ziel in dem aus der Behandlungsanlage III nach dem Entwässerungsvorgang ausgeschleusten, überwiegend festen Abfallanteil ATA im Vergleich zu seinem Gesamtgewicht noch einen möglichst hohen Anteil an Biomasse zu haben. Hierdurch ist eine biologische Trocknung des festen Abfallanteils ATA insbesondere ohne Zuführung weiterer Energie durchführbar, bei welcher die durch die mikrobielle Zersetzung eines Teils der organischen Substanz erzeugte Wärme für eine Trocknung ausreicht, während der restliche Teil der organischen Substanz als Biomasse und somit als wertvoller Brennstoff im getrockneten Abfallanteil verbleibt. Hierdurch ist weiterhin in dem aus der Behandlungsanlage III ausgeschleusten flüssigen Abfallanteil ATB ein Teil der ursprünglich im Abfall enthaltenen löslichen und feinsuspendierten Schadstoffe enthalten, welche somit den Brennstoff nicht mehr belasten.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- I: Behandlungsanlage
- II: Biobehandlungsanlage
- III: Behandlungsanlage
- IIIa - IIIc: Modul von III
- IV: Behandlungsanlage
- IVa - IVc: Anlagenteile von IV
- V: Behandlungsanlage
- ATA: überwiegend trockener Abfallanteil aus III
- ATB: überwiegend flüssiger Abfallanteil aus III
- A: Abfall
- AL: Abluft
- K: Kransystem
- S: Saugsystem
- Z: Zuluft

- 1: Müllbehandlungsanlage bzw. mechanisch biologische Abfallbehandlungsanlagen (MBA)
- 2: Müllbunker
- 3: Trommelsieb
- 4: Perkolator
- 5: Müllbehandlungsanlage (MBA)
- 6: DAMP-Anlage (entspricht II)
- 7: Mischbehälter von III
- 8: Rührwerk von III
- 9: Entwässerungseinrichtung von III
- 10: zylindrisches Becken
- 11: Quirl, Welle mit Rührarmen
- 12: Schneckenpresse
- 13: Wasser
- 14: Brei aus A und 13
- 15: Vorfermentierungsstufe (entspricht II)
- 16: Boden von II
- 17: Vorfermentationskammer von II
- 18: Sprinklersystem von II
- 19a - 19g: Bunker von II
- 20a - 20c: Fördersystem von II zu IIIa - IIIc
- 21: Trocknungsstufe in V

## Patentansprüche

1. Mehrstufiges Verfahren, zur Verarbeitung eines in einer Behandlungsanlage (I) mechanisch aufbereiteten Abfalls, welcher organische Stoffe umfasst, und in einer Behandlungsanlage (III) unter Zugabe von Wasser und mit mechanischer Umwälzung weiterbehandelt und in dieser in einen überwiegende festen Abfallanteil (ATA) und in einen überwiegend flüssigen Abfallanteil (ATB) aufgetrennt wird, wobei der Abfall zwischen der mechanischen Behandlungsanlage (I) und der Behandlungsanlage (III) zur Vorbereitung einer in der Behandlungsanlage (III) erfolgenden Aufteilung in den überwiegend festen Abfallanteil (ATA) und in den überwiegend flüssigen Abfallanteil (ATB) in einer Biobehandlungsanlage (II) zur Vorfermentation behandelt wird, **dadurch gekennzeichnet, dass** zur Erzielung der aeroben Vorfermentation des Abfalls (A) eine Verweildauer des Abfalls (A) und insbesondere eine ergänzende Behandlung des Abfalls (A) in dieser Biobehandlungsanlage (II) durch für den jeweiligen Abfall (A) spezifische Parameter (P-II) bestimmt wird, wobei hierzu Parameter (P-II) wie Temperatur des Abfalls (A) erfasst werden, wobei bei einer niedrigen Temperatur des Abfalls (A) die Verweildauer des Abfalls (A) verlängert wird und/oder eine Vermischung des Abfalls (A) mit wärmeren Abfallfraktionen erfolgt.

2. Mehrstufiges Verfahren nach Anspruch 1, **dadurch gekennzeichnet, dass** Parameter (P-II) wie Anteil an organischen Stoffen im Abfall (A) erfasst werden,
- wobei insbesondere bei einem geringen Anteil an organischen Stoffen im Abfall (A) die Verweildauer des Abfalls (A) verlängert wird und/oder eine Vermischung mit organikreicheren Abfallfraktionen erfolgt.

3. Mehrstufiges Verfahren nach wenigstens einem der vorhergehenden Ansprüche, **dadurch gekennzeichnet, dass** Parameter (P-II) wie Feuchtigkeit des Abfalls (A) erfasst werden,
- wobei insbesondere bei einer geringen Feuchtigkeit des Abfalls (A) eine Vermischung mit feuchteren Fraktionen erfolgt und/oder der Abfall (A) befeuchtet wird.

4. Mehrstufiges Verfahren nach wenigstens einem der vorhergehenden Ansprüche, **dadurch gekennzeichnet, dass** Parameter (P-II) wie Sauerstoffbedarf des Abfalls (A) erfasst werden,
- wobei insbesondere der Sauerstoffbedarf erfasst und ggf. geregelt wird.

5. Mehrstufiges Verfahren nach wenigstens einem der vorhergehenden Ansprüche, **dadurch gekennzeichnet, dass** der in der Biobehandlungsanlage (II) aufbereitete Abfall (A) in der Behandlungsanlage (III) zunächst in einem Homogenisierungsvorgang durch Mischen unter Zugabe von Wasser (13) mechanisch homogenisiert und anschließend in einem Entwässerungsvorgang ausgepresst wird, um den überwiegend festen Abfallanteil (ATA) und den überwiegend flüssigen Abfallanteil (ATB) zu erzeugen.

6. Mehrstufiges Verfahren nach Anspruch 5, **dadurch gekennzeichnet, dass** der Homogenisierungsvorgang in einem Mischbehälter (7) mit einem Rührwerk (8) durchgeführt wird und dass das anschließende Auspressen in einer Entwässerungseinrichtung (9) durchgeführt wird.

7. Mehrstufiges Verfahren nach Anspruch 5 oder 6, **dadurch gekennzeichnet, dass** die in dem Homogenisierungsvorgang in der Behandlungsanlage (III) erfolgende Behandlung des Abfalls (A) zum Erhalt einer definierten, breiigen Konsistenz und zum Verbleib von möglichst viel organischer Substanz im überwiegend festen Abfallteil (ATA) durch eine Regelung wenigstens eines Parameters (P-III) der Behandlungsanlage (III) geregelt wird, wobei hierzu Parameter (P-III) wie insbesondere die Verweilzeit und Wassergehalt des Abfalls (A) in der Behandlungsanlage (III) und wie insbesondere die in das Abfallgemisch eingetragenen Scherkräfte beim Mischen erfasst werden, wobei die Regelung auf der Basis der Parameter (P-III) derart erfolgt, dass der aus der Behandlungsanlage (III) nach dem Entwässerungsvorgang ausgeschleuste überwiegend feste Abfallanteil (ATA) im Vergleich zu seinem Gesamtgewicht noch einen möglichst hohen Anteil an Biomasse aufweist, wodurch insbesondere ohne Zuführung weiterer Energie eine biologische Trocknung des festen Abfallanteils (ATA) durchführbar ist, bei welcher die durch die mikrobielle Zersetzung eines Teils der organischen Substanz erzeugte Wärme für eine Trocknung ausreicht, während der restliche Teil der organischen Substanz als Biomasse im getrockneten Abfallanteil verbleibt und dass in dem aus der Behandlungsanlage (III) ausgeschleusten flüssigen Abfallanteil (ATB) ein Teil der ursprünglich im Abfall enthaltenen löslichen und feinsuspendierten Schadstoffe enthalten ist, so dass ein Schadstoffgehalt im festen Abfallanteil (ATA) reduziert ist.

8. Müllbehandlungsanlage (5) zur Behandlung von Abfall (A), welcher organische Stoffe umfasst, mit einer Behandlungsanlage (I) zur mechanischen Aufbereitung des Abfalls (A) und mit einer Behandlungsanlage (III) zur Weiterbehandlung des Abfalls (A) unter Zugabe von Wasser (13) und anschließender Auftrennung des Abfalls (A) in einen überwiegend festen Abfallanteil (ATA) und in einen überwiegend flüssigen Abfallanteil (ATB), wobei zwischen der Behandlungsanlage (I) und der Behandlungsanlage (III) eine Biobehandlungsanlage (II) angeordnet ist, in welcher der Abfall (A) zur Vorfermentation behandelbar ist, **dadurch gekennzeichnet, dass** der Abfall (A) zur Vorfermentation durch Mischen des Abfalls (A) und/oder Belüften des Abfalls (A) und/oder Befeuchten des Abfalls (A) behandelbar ist und dass Parameter (P-II) wie Temperatur des Abfalls (A) erfasst werden, wobei bei einer niedrigen Temperatur des Abfalls (A) die Verweildauer des Abfalls (A) verlängert wird und/oder eine Vermischung des Abfalls (A) mit wärmeren Abfallfraktionen erfolgt.

9. Müllbehandlungsanlage (5) nach Anspruch 8 zur Behandlung von Abfall (A), welcher organische Stoffe umfasst, mit einer Behandlungsanlage (III) zur Behandlung des Abfalls (A) unter Zugabe von Wasser (13), **dadurch gekennzeichnet, dass** in der Behandlungsanlage (III) ein Brei (14) aus Abfall (A) und Wasser (13) mischbar ist und dass die Behandlungsanlage (III) insbesondere einen Mischbehälter (7) und ein Rührwerk (8) umfasst.

## Claims

1. A multi-stage method for the processing of waste that has been mechanically processed in a treatment facility (I), comprising organic agents, and is being further treated in a treatment facility (III) with the addition of water and using mechanical agitation, and is being separated in the same into a predominantly solid waste portion (ATA) and into a predominantly liquid waste portion (ATB), wherein the waste is treated in a bio-treatment facility (II) between a mechanical treatment facility (I) and a treatment facility (III) for preparation of a distribution occurring in the treatment facility (III) into the predominantly solid waste portion (ATA) and into the predominantly liquid waste portion (ATB) for pre-fermentation, **characterized in that** in order to achieve aerobic pre-fermentation of the waste (A) a retention time of the waste (A), and in particular a supplementary treatment of the waste (A) in this bio-treatment facility (II), is determined by a parameter (P-II) specific for each waste (A), wherein for this purpose parameters (P-II), such as the temperature of the waste (A), are detected, wherein in case of a low temperature of the waste (A), the retention time of the waste (A) is extended, and/or an admixture of the waste (A) with warmer waste fractions is carried out.

2. The multi-stage method according to claim 1, **characterized in that** parameters (P-II), such as the proportion of organic agents within the waste (A) are detected,
- wherein, in particular in case of a low proportion of organic agents within the waste (A), the retention time of the waste (A) is extended, and/or an admixture with waste fractions richer in organics is carried out.

3. The multi-stage method according to at least one of the previous claims, **characterized In that** the parameters (P-II), such as the moisture of the waste (A), are detected,
- wherein in particular in case of low moisture of the waste (A), an admixture with moister fractions is carried out, and/or the waste (A) is moistened.

4. The multi-stage method according to at least one of the previous claims, **characterized in that** parameters (P-II) are detected, such as the oxygen requirement of the waste (A),
- wherein in particular the oxygen requirement is detected, and optionally controlled.

5. The multi-stage method according to at least one of the previous claims, **characterized in that** the waste (A) being processed in the blo-treatment facility (II) is initially mechanically homogenized in the treatment facility (III) in a homogenization process by means of admixing the same with the addition of water (13), and is subsequently pressed out in a dewatering process, in order to create the predominantly solid waste portion (ATA) and the predominantly liquid waste portion (ATB).

6. The multi-stage method according to claim 5, **characterized in that** the homogenization process is passed through a mixer (8) in a mixing vessel (7), and the subsequent pressing out is carried out in a dewatering unit (9).

7. The multi-stage method according to claims 5 or 6, **characterized in that** the treatment of the waste (A), carried out in the homogenization process in the treatment facility (III), is being controlled by controlling at least one parameter (P-III) of the treatment facility (III) in order to obtain a more defined, paste-like consistency, and in order to retain as much of the organic substance as possible in the predominantly solid waste portion (ATA), wherein for this purpose parameters (P-III), such as in particular the retention time and water content of the waste (A) in the treatment facility (III), and such as in particular the shear forces introduced into the waste admixture, are detected during admixing, wherein the controlling occurs based on the parameters (P-III) such that the predominantly solid waste portion (ATA), being discharged from the treatment facility (III) subsequent to the dewatering process, has a proportion of biomass that is as high as possible, as compared to the total weight thereof, by means of which, in particular without adding any additional energy, a biological drying of the solid waste portion (ATA) may be carried out, during which the heat generated by the microbial decomposition of part of the organic substance is sufficient for drying, while the remaining part of the organic substance remains in the dried waste portion as biomass, and that part of the originally soluble and finely suspended decontaminants is contained in the liquid waste portion (ATB) being discharged from the treatment facility (III) such that a contaminant content is reduced in the solid waste portion (ATA).

8. A waste treatment facility (5) for treating waste (A), comprising organic agents, having a treatment facility (I) for the mechanical processing of the waste (A), and having a treatment facility (III) for further processing of the waste (A), adding water (13), and subsequent separation of the waste (A) into a predominantly solid waste portion (ATA), and into a predominantly liquid waste portion (ATB), wherein a bio-treatment facility (II) is disposed between the treatment facility (I) and the treatment facility (III), in which the waste (A) may be treated for pre-fermentation, **characterized in that** the waste (A) may be treated for pre-fermentation by means of mixing the waste (A), and/or ventilating the waste (A), and/or moistening the waste (A), and that parameters (P-II), such as the temperature of the waste (A), are detected, wherein in case of a low temperature of the waste (A) the retention time of the waste (A) is extended, and/or an admixture of the waste (A) with warmer waste fractions is carried out.

9. The waste treatment facility (5) according to claim 8 for treating waste (A), comprising organic agents, having a treatment facility (III) for treating the waste (A) by means of adding water (13), **characterized in that** a paste (14) consisting of waste (A), and water (13) are miscible in the treatment facility (III), and that the treatment facility (III) comprises, in particular a mixing vessel (7) and a mixer (8).

## Revendications

1. Procédé en plusieurs étapes pour la transformation d'un déchet mécaniquement traité dans une installation de traitement (I), qui comprend des substances organiques, et qui dans une installation de traitement (III), avec addition d'eau et recirculation mécanique, subit un post-traitement, et dans ce dernier est subdivisé en une partie de déchet principalement solide (ATA) et une partie de déchet principalement liquide (ATB), le déchet étant traité, entre l'installation de traitement mécanique (I) et l'installation de traitement (III), pour la préparation d'une subdivision, destinée à être réalisée dans l'installation de traitement (III), en la partie de déchet principalement solide (ATA) et la partie de déchet principalement liquide (ATB) dans une installation de biotraitement (II) pour la préfermentation, **caractérisé en ce que**, pour réaliser la préfermentation aérobie du déchet (A), on détermine une durée de séjour du déchet (A) et en particulier un traitement complémentaire du déchet (A) dans cette installation de biotraitement (II) grâce à des paramètres (P-II) spécifiques de chacun des déchets (A), ce pour quoi on détermine des paramètres (P-II), tels que la température du déchet (A), la durée de séjour du déchet (A) étant prolongée dans le cas d'une basse température du déchet (A), et/ou un prémélange du déchet (A) ayant lieu en présence de fractions de déchet plus chaudes.

2. Procédé en plusieurs étapes selon la revendication 1, **caractérisé en ce que** des paramètres (P-II), tels que la proportion de substances organiques dans le déchet (A), sont déterminés,
- dans lequel, en particulier en présence d'une faible proportion de substances organiques dans le déchet (A), on prolonge la durée de séjour du déchet (A), et/ou on procède à un mélange à des fractions de déchet plus riches en substances organiques.

3. Procédé en plusieurs étapes selon au moins l'une des revendications précédentes, **caractérisé en ce qu'**on détermine des paramètres (P-II) tels que l'humidité du déchet (A),
- dans lequel, en particulier en présence d'une faible humidité du déchet (A), on procède à un mélange avec des fractions plus humides, et/ou on humidifie le déchet (A).

4. Procédé en plusieurs étapes selon au moins l'une des revendications précédentes, **caractérisé en ce qu'**on détermine des paramètres (P-II) tels que la demande en oxygène du déchet (A),
- dans lequel en particulier c'est la demande en oxygène qui est déterminée et éventuellement régulée.

5. Procédé en plusieurs étapes selon au moins l'une des revendications précédentes, **caractérisé en ce que** le déchet (A) transformé dans l'installation de biotraitement (II) est, dans l'installation de traitement (III), mécaniquement homogénéisé d'abord dans une opération d'homogénéisation par mélange avec addition d'eau (13), puis est exprimé dans une opération de déshydratation, pour produire la partie de déchet principalement solide (ATA) et la partie de déchet principalement liquide (ATA).

6. Procédé en plusieurs étapes selon la revendication 5, **caractérisé en ce que** l'opération d'homogénéisation est mise en oeuvre dans un récipient mélangeur (7) muni d'un agitateur (8), et que l'expression qui a lieu ensuite est mise en oeuvre dans un dispositif de déshydratation (9).

7. Procédé en plusieurs étapes selon la revendication 5 ou 6, **caractérisé en ce que** le traitement du déchet (A), réalisé dans l'opération d'homogénéisation dans l'installation de traitement (III), est régulée, pour maintenir une consistance pâteuse parfaitement définie et pour maintenir une quantité de substance organique aussi grande que possible dans la partie de déchet principalement solide (ATA), grâce à une régulation d'au moins un paramètre (P-III) de l'installation de traitement (III), dans lequel on détermine à cette fin des paramètres (P-III) tels en particulier que le temps de séjour et la teneur en eau du déchet (A) dans l'installation de traitement (III), et tels en particulier que les forces de cisaillement appliquées lors du mélange dans le mélange de déchets, la régulation ayant lieu sur la base des paramètres (P-III) de telle sorte que la partie de déchet principalement solide (ATA), évacuée de l'installation de traitement (III) après l'opération de déshydratation, présente encore, par comparaison avec son poids total, une proportion aussi élevée que possible de biomasse, ce en conséquence de quoi il soit possible, sans apport d'une énergie supplémentaire, de mettre en oeuvre un séchage biologique de la partie de déchet solide (ATA), au cours de laquelle la chaleur produite par la décomposition microbienne d'une partie de la substance organique suffit pour un séchage, tandis que la partie restante de la substance organique reste sous forme de biomasse dans la partie de déchet séchée, et qu'une partie des polluants solubles et en suspension fine initialement contenus dans le déchet soit présente dans la partie de déchet liquide (ATB) évacuée de l'installation de traitement (III), de telle sorte qu'il en résulte une réduction de la teneur en polluants de la partie de déchet solide (ATA).

8. Installation de traitement des ordures (5) pour le traitement d'un déchet (A) comprenant des substances organiques, comportant une installation de traitement (I) pour la transformation mécanique du déchet (A), et une installation de traitement (III) pour le post-traitement du déchet (A) avec addition d'eau (13), puis séparation du déchet (A) en une partie de déchet principalement solide (ATA) et une partie de déchet principalement liquide (ATB), dans laquelle, entre l'installation de traitement (I) et l'installation de traitement (III), se trouve une installation de biotraitement (II), dans laquelle le déchet (A) peut être prétraité pour préfermentation, **caractérisée en ce que** le déchet (A) peut, pour la préfermentation, être traité par mélange du déchet (A) et/ou aération du déchet (A) et/ou humidification du déchet (A), et que des paramètres (P-II), tels que la température du déchet (A), sont déterminés, dans laquelle, en présence d'une basse température du déchet (A), on prolonge la durée de séjour du déchet (A) et/ou on procède à un mélange du déchet (A) en présence de fractions de déchet plus chaudes.

9. Installation de traitement des ordures (5) selon la revendication 8 pour le traitement d'un déchet (A) qui comprend des substances organiques, comportant une installation de traitement (III) pour le traitement du déchet (A) par addition d'eau (13), **caractérisée en ce que** dans l'installation de traitement (III) il est possible de mélanger une pâte (14) constituée du déchet (A) et d'eau (13), et que l'installation de traitement (III) comprend en particulier un récipient mélangeur (7) et un agitateur (8).
